# EUROPEAN PATENT APPLICATION

(11) **EP 4 485 209 A1**
(43) Date of publication of application: **01.01.2025**
(21) Application number: 23182028.3
(22) Date of filing: 28.06.2023
(51) Int. Cl.: G06F 11/20, B60W 50/02, B60W 50/029

(54) **DATA PROCESSING SYSTEM FOR A VEHICLE, VEHICLE, AND METHOD**

(71) Applicant: Magna Electronics Sweden AB, 447 37 Vårgårda (SE)
(72) Inventor: ZHANG, Tianbao, 85716 Unterschleißheim (DE); REIF, Thomas, 85716 Unterschleißheim (DE); VOM DORFF, Sebastian, 85716 Unterschleißheim (DE); SEDDIKI, Karim, 95800 Cergy-Pontoise (FR)
(74) Representative: Reichert & Lindner Partnerschaft Patentanwälte

(57) **Abstract**

A data processing system (1) for a vehicle (100) includes a first set of hardware resources (13) which in a first mode of operation are utilized to perform a first set of functions (21), for example driver assistance functions. The data processing system (1) also includes a second set of hardware resources (14), which in the first mode of operation are utilized to perform a second set of functions (22), for example infotainment functions. In a second mode of operation, defined by a failure of the data processing system (1) to perform the first set of functions (21), the data processing system (1) utilizes the second set of hardware resources (14) to perform a third set of functions (23), for example related to a minimum risk maneuver.

## Description

The invention relates to a data processing system for a vehicle, to a vehicle with such a data processing system, and to a method for operating such a data processing system.

In the automotive sector, autonomous and semi-autonomous driving are areas of vibrant development. (Semi-)Autonomous driving relies on advanced driver assistance systems (ADAS) implemented on board of the vehicle. Such ADAS typically include sensors, actuators, and suitably configured data processing systems, e.g., electronic control units (ECUs), to process data received from the sensors and to generate control signals to the actuators. According to legal and/or industry standards, ADAS require certain failsafe functionality, amongst which is the performance of a minimum risk maneuver (MRM) in case of a failure in ADAS. A simple MRM may be to bring the vehicle to a stop. A more complex MRM may include bringing the vehicle to a stop on the rightmost lane of a road (in countries with right-hand traffic) or the leftmost lane of a road (in countries with left-hand traffic) while avoiding collisions with other entities (e.g., pedestrians, vehicles) on the road. An MRM may be triggered directly by a failure in ADAS or may only be triggered if a driver, following an alarm signal indicating the failure in ADAS, does not react. MRMs are for example defined in UN Regulation No. 157 - Automated Lane Keeping Systems (ALKS).

US 9 891 688 B2 describes two or more data processing units in a vehicle which are capable of performing partially redundant functionality. This reduces the overall risk of failure. An energy-saving way of managing such redundancy is also given.

US 10 780 894 B2 discloses, in the context of a vehicle control device, the substitution of a computation from a first computing unit to a second computing unit. The success of such substitution is monitored.

US 11 305 783 B2 discloses the transfer of tasks from a computing device to a still functioning part of an otherwise failed computing device on board of a vehicle.

US 11 380 107 B2 relates to redundancy in a network topology.

US 11 538 287 B2 relates to managing vehicle data collection.

US 2019 / 0 340 116 A1 discloses providing an additional ECU which can perform any of the functions performed by a plurality of other ECUs in case one such other ECU fails.

US 2022 / 0 116 405 A1 relates to vehicle communication.

The above prior art relates to the avoiding of overall failure by redundancy, and the handling of data. It does not address the performance of specific functions in case of failure. It is known to provide a separate ECU to perform an MRM in case of a failure in ADAS. This, however, requires this separate, i.e., additional ECU, which is provided just for the case of a failure and otherwise is doing nothing.

The object of the invention is to provide a more efficient way of achieving the capability of performing special functions in case of a failure of a system on board of a vehicle.

This object is achieved by a data processing system according to claim 1. Claim 8 relates to a corresponding vehicle. Claim 9 relates to a corresponding method. The dependent claims relate to advantageous embodiments.

The data processing system according to the invention for a vehicle includes a first set of hardware resources and a second set of hardware resources. The first set of hardware resources is different from the second set of hardware resources. The data processing system can operate in a first mode of operation and in a second mode of operation. The data processing system is configured to, in the first mode of operation, execute a first set of functions utilizing the first set of hardware resources and execute a second set of functions utilizing the second set of hardware resources, wherein the second set of functions is different from the first set of functions. The first mode of operation may in particular be a "standard" mode of operation, which applies most of the time the system is operational, in particular if the system operates as intended, i.e., without failures.

The second mode of operation is defined by a failure of the data processing system to execute the first set of functions on the first set of hardware resources.

According to the invention, the data processing system is configured to, in the second mode of operation, execute a third set of functions on the second set of hardware resources, wherein the third set of functions is different from the second set of functions.

The third set of functions are the functions to be performed in case of failure of the data processing system to perform the first set of functions on the first set of hardware resources. In the approach according to the invention, no additional, separate hardware resources are required to perform the third set of functions. Instead, hardware resources (the second set of hardware resources) present in the data processing system for other purposes (performing the second set of functions) are reassigned to performing the third set of functions. As no additional resources are needed for performing the third set of functions, the approach according to the invention is more efficient than the prior art.

The third set of functions may be different from the first set of functions. The third set of functions may include functions which are also included in the first set of functions.

In the second mode of operation the second set of hardware resources may be dedicated entirely to the third set of functions. It may also be conceivable that only a part of the second set of hardware resources is required for performing the third set of functions, while another part of the second set of hardware resources remains available for performing the second set of functions, albeit at a reduced level.

In an embodiment, the data processing system is implemented on a single electronic control unit (ECU) for the vehicle, the single electronic control unit including the first set of hardware resources and the second set of hardware resources.

In a different embodiment, the data processing system is implemented on a first electronic control unit and a second electronic control unit different from the first electronic control unit. The first electronic control unit includes the first set of hardware resources, the second electronic control unit includes the second set of hardware resources.

In a general embodiment, the first set of functions include driver assistance functions, in particular advanced driver assistance functions corresponding to advanced driver assistance systems (ADAS).

The third set of functions, in an embodiment, include functions related to performing a minimum risk maneuver (MRM). This is of particular relevance if the first set of functions implements ADAS functionality, and a failure to perform these ADAS functionality occurs. The requirement of performing an MRM can be met without requiring a dedicated additional ECU for just the MRM.

In an embodiment, the third set of functions include functions related to alerting the driver of the failure of the data processing system to perform the first set of functions on the first set of hardware resources. This embodiment can be combined with the previously described embodiment. In particular, if the first set of functions implements ADAS functionality, and there occurs a failure in ADAS, performing the third set of functions may first result in issuing an alarm signal to the driver to alert the driver of the necessity to take over vehicle control. The further performing of the third set of functions may include waiting for a pre-defined period of time for the driver to react to the alarm signal, and if there is no adequate reaction from the driver, performing the functions related to the MRM.

In an embodiment, the second set of functions include infotainment functions. In particular in case of a failure in ADAS, the priority of infotainment is low compared with the priority of an MRM. Therefore, the second set of hardware resources, in the first mode of operation utilized for the infotainment functions, can be made available for performing MRM functions without incurring serious problems.

A vehicle according to the invention includes a data processing system according to the invention as described above. In such a vehicle, the required functionalities, e.g., performing MRM in case of a failure in ADAS, are implemented in an efficient manner, rendering the vehicle overall more efficient. The vehicle also includes one or more sensors coupled to the data processing system to provide sensor data to the data processing system; the sensor data may represent information on, for example, a state of motion of the vehicle, and / or surroundings of the vehicle. The vehicle furthermore includes one or more actuators coupled to the data processing system to receive control signals from the data processing system. Such control signals, if generated according to MRM related functions of the third set of functions, via the actuators cause the vehicle to actually perform the MRM.

The method according to the invention for operating a data processing system for a vehicle is directed to a data processing system including a first set of hardware resources and a second set of hardware resources; the second set of hardware resources is different from the first set of hardware resources. In particular, the method may be performed on a data processing system according to the invention, as described above, which data processing system moreover may be used on board of a vehicle according to the invention, as also described above.

The method includes the following steps: Functions of a first set of functions are executed on the first set of hardware resources, while functions of a second set of functions are executed on the second set of hardware resources. The first set of functions here is different from the second set of functions. For example, the first set of functions may include driver assistance functions, related to providing ADAS functionality. The second set of functions may include infotainment functions.

The execution of the functions of the first set of functions on the first set of hardware resources is monitored by the data processing system, in order to detect a failure of the data processing system to execute the first set of functions. This monitoring is done by known means. For example, an operating system of the data processing system could receive error codes from a component of the first set of hardware resources indicating a failure of such a component. Additionally or alternatively, the operating system could periodically send signals to components of the first set of hardware resources, expecting a corresponding return signal. Non-arrival of such a return signal within a defined period after sending the signal could be taken as indication of a failure in the respective component. Further possibilities for detecting failures are also possible. Generally speaking, failures of the data processing system to execute the first set of functions may be due to hardware failures or software errors.

If the monitoring indicates a failure to perform the first set of functions on the first set of hardware resources, at least a part of the second set of hardware resources is allocated to the execution of functions of a third set of functions; functions of the third set of functions are then executed on the at least part of the second set of hardware resources. Any remaining part of the second set of hardware resources may still be used for performing functions of the second set of functions.

The third set of functions may be different from the first set of functions. The third set of functions may include functions which are also included in the first set of functions.

In an embodiment, the third set of functions include functions related to performing a minimum risk maneuver. For example, if the first set of functions include functions for implementing ADAS functionality, then a failure to perform these functions requires some action to assure safety of driver and passengers of a vehicle including the data processing system, as well as of entities in the environment of said vehicle. In this embodiment, the detection of the failure triggers the allocation of resources from the second set of hardware resources to functions of the third set of functions which are related to performing a minimal risk maneuver.

In a further embodiment, which may, but need not, be combined with the previous one, the third set of functions include functions related to alerting the driver of the failure of the data processing system to execute the first set of functions on the first set of hardware resources. Again, if the first set of functions include functions for implementing ADAS functionality, this alert is intended to warn the driver to take over control of the vehicle. In a combination with the previous embodiment, if the data processing system detects that the driver, despite the alert, has not assumed control of the vehicle, for example within a pre-defined period, then the data processing system performs MRM-related functions on the second set of hardware resources. Detecting whether or not the driver has assumed control of the vehicle is accomplished by known means.

According to a general embodiment, executing the third set of functions involves receiving and processing data from one or more sensors and sending control signals to one or more actuators. The sensor and actuators are not part of the data processing system but may be part of a vehicle which includes the data processing system.

Below, the invention and its advantages will be described with reference to the accompanying figures.
- Figure 1: shows a data processing system in the first mode of operation.
- Figure 2: shows the data processing system of Fig. 1 in the second mode of operation.
- Figure 3: shows a vehicle according to the invention.
- Figure 4: is a flow chart illustrating a method according to the invention.
- Figure 5: is a flow chart illustrating an example of a method according to the invention.

The figures only show examples how the invention can be implemented and are not to be taken as a limitation of the invention to the examples shown.

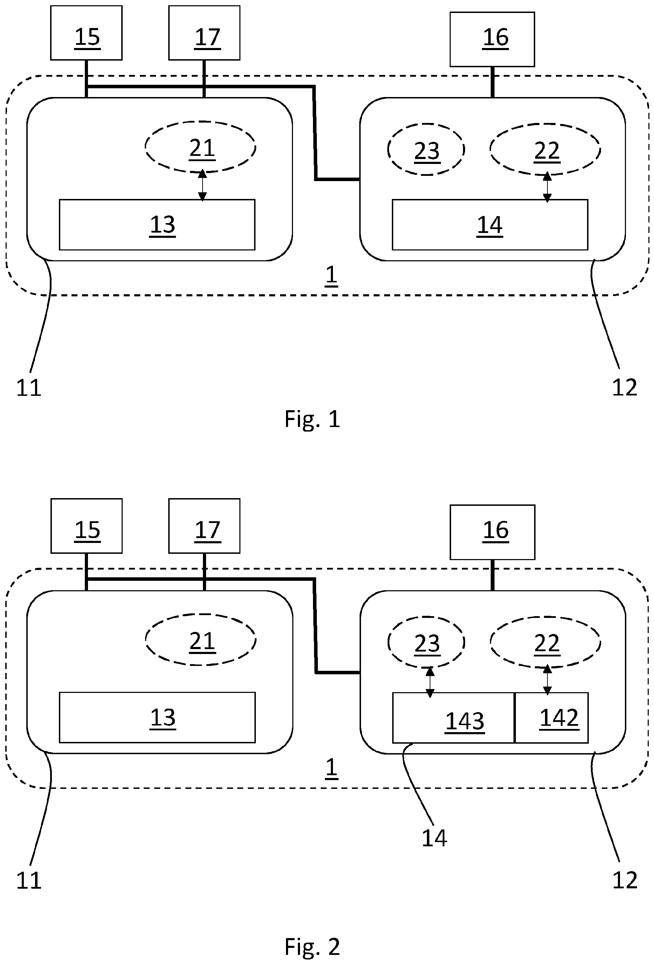

**Fig. 1** shows a data processing system 1 according to the invention including a first ECU 11 with a first set of hardware resources 13 and a second ECU 12 with a second set of hardware resources 14. The data processing system 1, here more precisely first ECU 11, is performing a first set of functions 21 utilizing the first set of hardware resources 13. The first set of functions 21 here are advanced driver assistance functions. In order to perform these functions, the first ECU 11 is connected with sensors 15 and actuators 17. The second ECU 12, which is connected to a human-machine-interface 16, is performing a second set of functions 22 utilizing the second set of hardware resources 14. Here, the second set of functions 22 are infotainment functions. The second ECU 12 also has stored (for example, as program code in a memory) a third set of functions 23, here functions related to performing a minimal risk maneuver. For this purpose, the second ECU 12 is connected to the sensors 15 and actuators 17. In the first mode of operation of the data processing system 1 shown in Fig. 1, the third set of functions 23 are not performed, only the second set of functions 22 are.

**Fig. 2** shows the data processing system 1 according to the invention, also shown in Fig. 1, in the second mode of operation. Failure of the first ECU 11 implies that the data processing system 1 can no longer perform the first set of functions 21. For proper performance of an MRM, the third set of functions 23 must be performed. The third set of functions 23 are performed by the second ECU 12, utilizing a part 143 of the second set of hardware resources 14; another part 142 of the second set of hardware resources 14 remains for performing the second set of functions 22 at a reduced level. For turning the performance of the third set of functions 23 into a correct MRM, the second ECU 12 is connected to the sensors 15 and actuators 17, which in the first mode of operation are used in the context of the first set of functions 21. The allocation as such of hardware resources to functions may be accomplished by any means known in computer science, in particular in the area of embedded systems; such means include direct operating system functionality as well as virtualization approaches, like hypervisors. For example, type 1 or type 2 hypervisors may be used; the allocation of hardware resources to functions may also be achieved by booting different (i.e., dependent on the respective set of functions) operating system images.

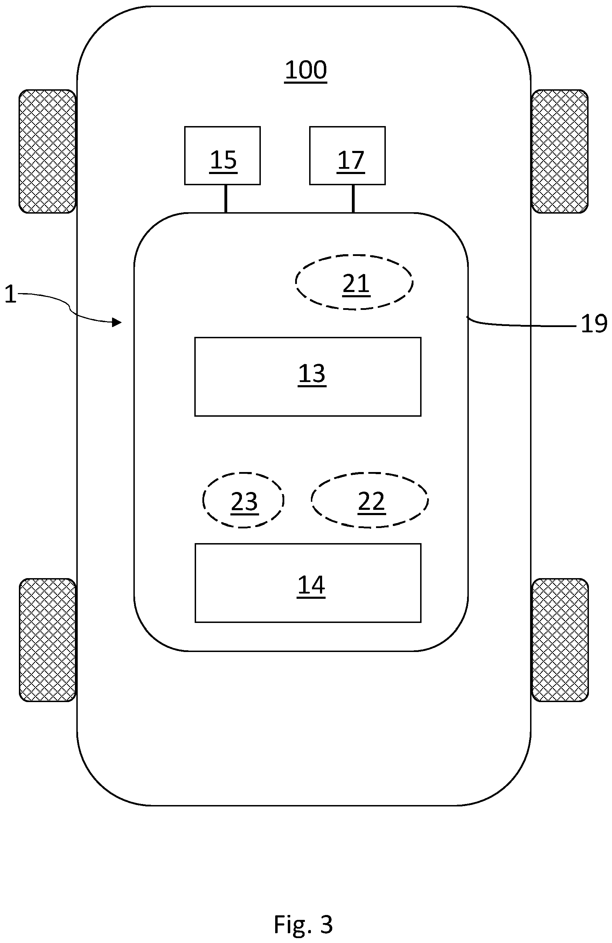

**Fig. 3** shows a vehicle 100 according to the invention. The vehicle 100 has a data processing system 1 according to the invention, which here is implemented on a single ECU 19. The ECU 19 is connected to sensors 15 and actuators 17, which are used in the context of ADAS, including also MRM. ECU 19 includes a first set of hardware resources 13 and a second set of hardware resources 14. In the first mode of operation of the data processing system 1, the first set of hardware resources 13 is utilized to perform a first set of functions 21, here advanced driver assistance functions. In the first mode of operation of the data processing system 1, the second set of hardware resources 14 is utilized to perform a second set of functions 22, here infotainment functions. In the second mode of operation of the data processing system 1, ECU 19 cannot perform the first set of functions 21, for example, due to damage or other malfunction of the first set of hardware resources 13. In the second mode of operation of the data processing system 1, the second set of hardware resources 14 is at least partially utilized to perform a third set of functions 23, related to the performance of a minimal risk maneuver. The performance of the third set of functions 23 by the data processing system 1, using input from sensors 15 and sending control signals to actuators 17, causes the vehicle 100 to perform the minimal risk maneuver.

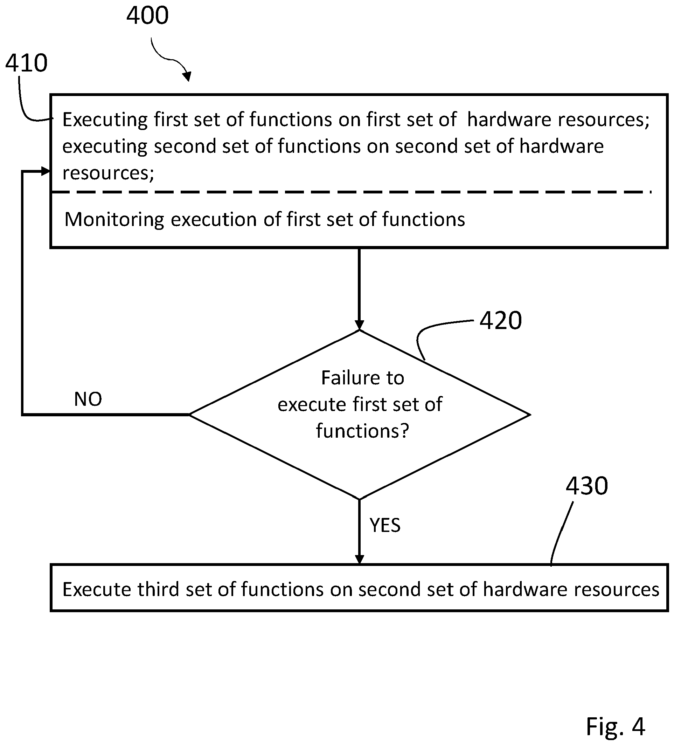

**Fig. 4** shows a flow chart 400 illustrating a method according to the invention. In step 410 functions of a first set of functions are executed on a first set of hardware resources of a data processing system, and functions of a second set of functions are executed on a second set of hardware resources of the data processing system. The data processing system is also performing a monitoring of the execution of the first set of functions on the first set of hardware resources. As long as this monitoring has not, in decision block 420, detected a failure in the execution of the first set of functions on the first set of hardware resources, the method continues at step 410, which represents a standard, ordinary, in particular failure-free mode of operation, corresponding to the first mode of operation discussed above. If, on the other hand, at decision block 420 the monitoring has detected a failure to execute the first set of functions on the first set of hardware resources, the data processing system in step 430 executes functions of a third set of functions on the second set of hardware resources. This corresponds to the second mode of operation discussed above.

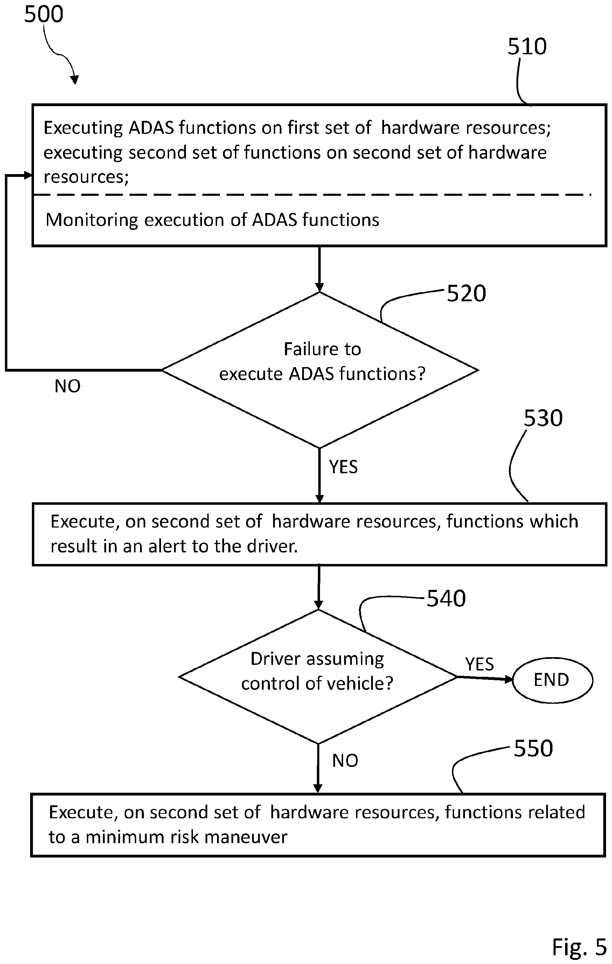

**Fig. 5** shows a flowchart 500 illustrating a more complex embodiment of a method according to the invention. In step 510 functions of a first set of functions, which here are ADAS-related functions, are executed on a first set of hardware resources of a data processing system, and functions of a second set of functions are executed on a second set of hardware resources of the data processing system. The data processing system is also performing a monitoring of the execution of the first set of functions, i.e., of the ADAS-related functions, on the first set of hardware resources. As long as this monitoring has not, in decision block 520, detected a failure in the execution of the ADAS-related functions on the first set of hardware resources, the method continues at step 510, which represents a standard, ordinary, in particular failure-free mode of operation, corresponding to the first mode of operation discussed above. If, on the other hand, at decision block 520 the monitoring has detected a failure to execute the ADAS-related functions on the first set of hardware resources, the data processing system in step 530 executes functions of a third set of functions on the second set of hardware resources, which functions result in an alert to the driver. The purpose of the alert is to warn the driver to assume control of the vehicle. The data processing system waits a pre-defined time period for the driver to assume control of the vehicle. If after this time-period, in decision block 540, it is found that the driver has assumed control of the vehicle, the method ends; decisions on further actions are taken by the driver. On the other hand, if after this time-period, in decision block 540, it is found that the driver has not assumed control of the vehicle, the data processing system in step 550 executes functions of the third set of functions on the second set of hardware resources, which functions are related to a minimum risk maneuver. Step 530, decision block 540, and step 550 correspond to the second mode of operation discussed above. Implemented in a vehicle, performing the functions related to the minimum risk maneuver, together with communication between the data processing system and sensors and actuators of the vehicle, results in the vehicle performing the corresponding minimum risk maneuver.

### List of Reference Signs

- 1: data processing system
- 11: first ECU
- 12: second ECU
- 13: first set of hardware resources
- 14: second set of hardware resources
- 15: sensors
- 16: human machine interface
- 17: actuators
- 19: ECU
- 21: first set of functions
- 22: second set of functions
- 23: third set of functions
- 100: vehicle
- 400: flowchart
- 410 - 430: method steps
- 500: flowchart
- 510 - 550: method steps

## Claims

1. Data processing system (1) for a vehicle (100), the data processing system (1) including:
a first set of hardware resources (13);
a second set of hardware resources (14);
the data processing system (1) configured to, in a first mode of operation, execute a first set of functions (21) utilizing the first set of hardware resources (13) and execute a second set of functions (22) utilizing the second set of hardware resources (14), wherein the second set of functions (22) is different from the first set of functions (21);
**characterized in that**
the data processing system (1) is configured to, in a second mode of operation, defined by a failure of the data processing system (1) to execute the first set of functions (21) on the first set of hardware resources (13), execute a third set of functions (23) on the second set of hardware resources (14), wherein the third set of functions (23) is different from the second set of functions (22).

2. Data processing system (1) according to claim 1, wherein the data processing system (1) is implemented on a single electronic control unit (19) for the vehicle (100), the single electronic control unit (19) including the first set of hardware resources (13) and the second set of hardware resources (14).

3. Data processing system (1) according to claim 1, wherein the data processing system (1) is implemented on a first electronic control unit (11) and a second electronic control unit (12) different from the first electronic control unit (11), wherein the first electronic control unit (11) includes the first set of hardware resources (13) and the second electronic control unit (12) includes the second set of hardware resources (14).

4. Data processing system (1) according to one of the previous claims, wherein the first set of functions (21) include driver assistance functions.

5. Data processing system (1) according to one of the previous claims, wherein the third set of functions (23) include functions related to performing a minimum risk maneuver.

6. Data processing system (1) according to one of the previous claims, wherein the third set of functions (23) include functions related to alerting the driver of the failure of the data processing system (1) to execute the first set of functions (21) on the first set of hardware resources (13).

7. Data processing system (1) according to one of the previous claims, wherein the second set of functions (22) include infotainment functions.

8. Vehicle (100) including:
a data processing system (1) according to one of the previous claims;
one or more sensors (15) coupled to the data processing system (1) to provide sensor data to the data processing system (1);
one or more actuators (17) coupled to the data processing system (1) to receive control signals from the data processing system (1).

9. Method for operating a data processing system (1) for a vehicle (100), the data processing system (1) including
a first set of hardware resources (13), and
a second set of hardware resources (14);
the method including the steps:
executing functions of a first set of functions (21) on the first set of hardware resources (13);
executing functions of a second set of functions (22) on the second set of hardware resources (14), wherein the second set of functions (22) is different from the first set of functions (21);
monitoring the execution of the functions of the first set of functions (21) on the first set of hardware resources (13);
if the monitoring indicates a failure to perform functions of the first set of functions (21) on the first set of hardware resources (13), allocate at least a part (143) of the second set of hardware resources (14) to the execution of functions of a third set of functions (23) and execute functions of the third set of functions (23) on the at least part (143) of the second set of hardware resources (14).

10. Method according to claim 9, wherein the third set of functions (23) include functions related to performing a minimum risk maneuver.

11. Method according to claim 9 or 10, wherein the third set of functions (23) include functions related to alerting the driver of the failure of the data processing system (1) to execute the functions of the first set of functions (21) on the first set of hardware resources (13).

12. Method according to one of the claims 9 to 11, wherein executing the functions of the third set of functions (23) involves receiving and processing data from one or more sensors (15) in the vehicle (100) and sending control signals to one or more actuators (17) in the vehicle (100).
